# FASCICULE DE BREVET EUROPEEN

(11) **EP 3 408 177 B1**
(45) Date de publication et mention de la délivrance du brevet: **26.02.2020**
(21) Numéro de dépôt: 17701864.5
(22) Date de dépôt: 26.01.2017
(51) Int. Cl.: B64D 11/06

(54) **BUTÉE D'ARRÊT POUR SIÈGE D'AVION**
ANSCHLAG FÜR FLUGZEUGSITZ
STOP FOR AIRCRAFT SEAT

(30) Priorité: 26.01.2016 US 201661287132 P
(43) Date de publication de la demande: 05.12.2018
(73) Titulaire: Zodiac Seats France, 36100 Issoudun (FR)
(72) Inventeur: AURY, Nicolas, 36100 Issoudun (FR)
(74) Mandataire: Marconnet, Sébastien
(86) Numéro de dépôt international: PCT/EP2017/051674
(87) Numéro de publication internationale: WO 2017/129692

(56) Documents cités:
- EP-A1- 1 607 329
- EP-A1- 1 803 645
- WO-A1-2012/100152
- US-A1- 2008 191 115
- US-A1- 2010 124 457

## Description

La présente invention porte sur une butée d'arrêt pour siège d'avion (voir par exemple le document WO2012/100152A1).

L'invention trouve une application particulièrement avantageuse, mais non exclusive, avec les sièges d'avion de type classe affaire associé à un meuble.

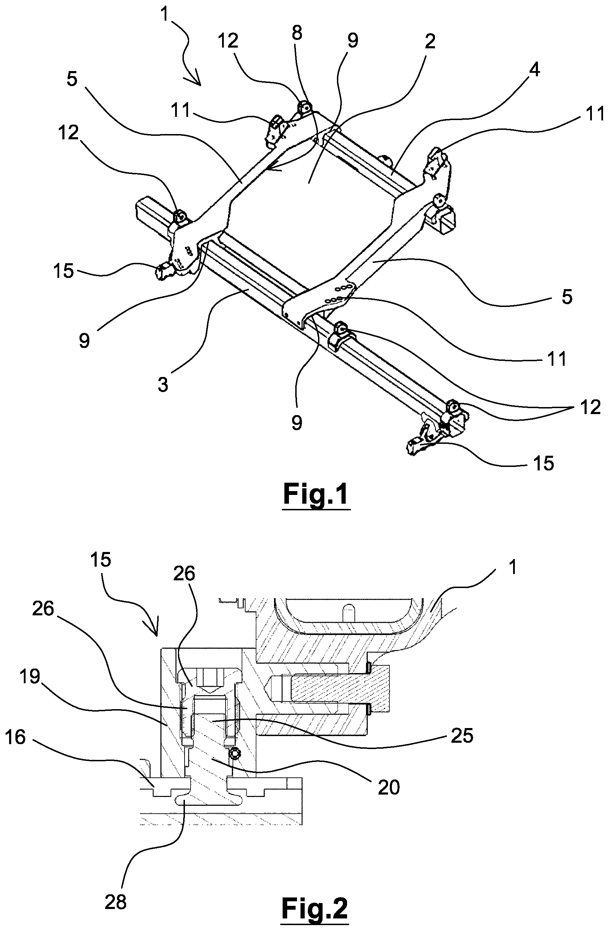

Comme cela est représenté sur la figure 1, une palette support 1 de siège d'avion comporte, de façon connue en soi, un panneau de renfort 2 ainsi qu'une poutre avant 3 et une poutre arrière 4 situées de part et d'autre du panneau de renfort 2.

L'assemblage de cet ensemble est réalisé au moyen de deux longerons 5 munis chacun d'une gorge 8 recevant un bord du panneau de renfort 2. La fixation entre chaque longeron 5 et le panneau 2 est réalisé par exemple par rivetage. En outre, chaque longeron 5 comporte à chacune de ses extrémités un logement 9 pour recevoir respectivement la poutre avant 3 et la poutre arrière 4. La fixation des poutres 3, 4 aux longerons 5 pourra être réalisée par exemple au moyen de boulons ou tout autre dispositif de fixation adapté. La palette support 1 comporte en outre des organes de fixation 11 avec le siège d'avion ainsi que des organes de fixation 12 avec un meuble associé au siège. La palette 1 est également équipée d'attaches 15 assurant la fixation de la palette 1 avec des rails 16 s'étendant le long du plancher de la cabine d'avion.

En l'occurrence, comme on peut le voir sur la figure 2, chaque attache 15 comporte un corps 19 creux dans lequel est monté un pion 20 mobile en translation par rapport au corps 19 pour permettre un maintien par serrage de l'attache 15 sur le rail 16.

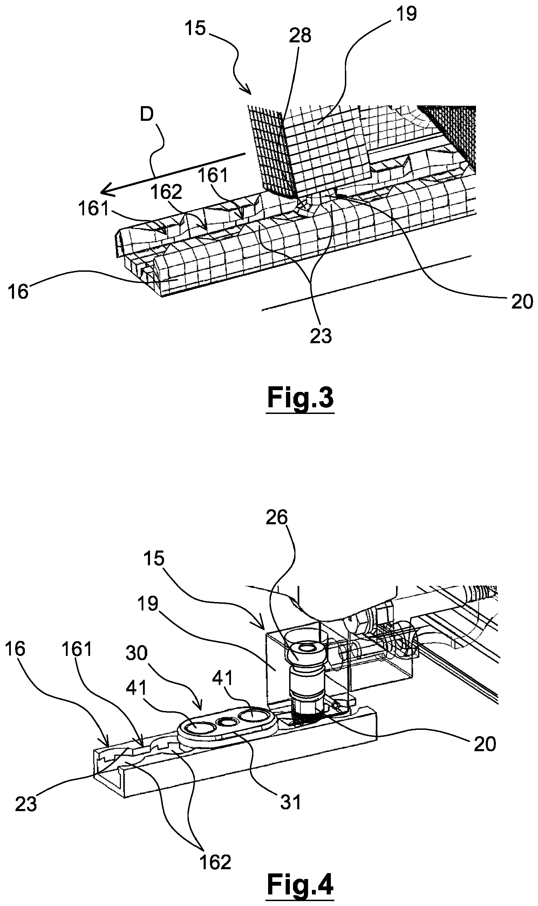

A cet effet, le rail 16 présente une alternance de zones d'appui 161 dans lesquelles deux lèvres 23 dirigées l'une vers l'autre font saillie vers l'intérieur du rail 16, et de zones ouvertes 162 dans lesquelles une longueur des lèvres 23 en vis-à-vis l'une de l'autre est réduite voire nulle, tel que cela est illustré sur la figure 3.

Le pion 20 présente une extrémité filetée 25 coopérant avec un alésage taraudé d'une vis creuse 26. Ainsi, la mise en rotation de la vis 26 par l'opérateur au moyen d'un outil adapté permet de faire remonter le pion 20, de telle façon que les lèvres 23 d'une zone d'appui 161 du rail 16 sont serrées entre un rebord radial 28 d'extrémité du pion 20 et le corps 19 de l'attache 15.

Or, on a observé qu'en cas de crash, les fortes contraintes auxquelles sont soumis le siège et les rails 16 sont susceptibles d'engendrer un glissement de l'attache 15 à l'intérieur du rail 16 suivant la direction D pouvant mener à une sortie du pion 20 via la zone ouverte 162 adjacente à la zone d'appui 161 de l'attache 15, tel que montré sur la figure 3.

Le document US2010/124457 décrit un système de fixation de siège ou d'un autre composant sur un rail de siège d'avion.

L'invention vise à remédier efficacement à cet inconvénient en proposant un ensemble comportant: un rail présentant une alternance de zones d'appui dans lesquelles deux lèvres dirigées l'une vers l'autre font saillie vers l'intérieur du rail, et de zones ouvertes, et une palette support de siège ayant des organes de fixation avec le siège d'avion et au moins une attache avec un rail de cabine d'avion, caractérisé en ce que ledit ensemble comporte en outre: une butée d'arrêt pour siège d'avion destinée à être installée sur ledit rail, comportant: un corps muni d'un plongeur destiné à s'insérer dans une zone ouverte dudit rail pour venir en butée contre des lèvres d'une zone d'appui, et au moins un dispositif de maintien de ladite butée d'arrêt sur ledit rail, et en ce que ladite butée d'arrêt est configurée pour être montée sur ledit rail à distance de ladite attache.

L'invention permet ainsi, grâce au plongeur venant en butée contre les lèvres du rail, de limiter le déplacement du pion de l'attache du siège à l'intérieur du rail afin d'éviter sa sortie du rail en cas de crash.

Selon une réalisation, le dispositif de maintien comporte une portion mobile en translation par rapport au corps, ladite portion mobile étant munie d'au moins un rebord transversal pour permettre un serrage d'une lèvre du rail entre ledit rebord transversal et le corps de la butée d'arrêt.

Selon une réalisation, ladite butée d'arrêt comporte deux ensembles de rebords transversaux situés de part et d'autre du plongeur.

L'invention a également pour objet un ensemble caractérisé en ce qu'il comporte:
- une palette support de siège ayant des organes de fixation avec le siège d'avion et au moins une attache avec un rail de cabine d'avion, et
- une butée d'arrêt telle que précédemment définie selon l'une quelconque des revendications précédentes, ladite butée d'arrêt étant montée sur ledit rail à distance de ladite attache.

Selon une réalisation, un écart entre la butée d'arrêt et l'attache est comprise entre 2mm et 3mm.

Selon une réalisation, un élément amortisseur est monté entre une poutre de la palette support de siège et un rail de cabine d'avion.

Selon une réalisation, l'élément amortisseur fait saillie par rapport à un plancher de cabine d'avion.

Selon une réalisation, l'élément amortisseur comporte:
- un corps,
- une portion réalisée dans un matériau élastique fixée sur le corps, et
- au moins un dispositif de maintien sur le rail.

Selon une réalisation, l'élément amortisseur est muni d'un plongeur destiné à s'insérer dans une zone ouverte dudit rail pour venir en butée contre des lèvres d'une zone d'appui.

Selon une réalisation, l'élément amortisseur comporte une portion mobile en translation par rapport au corps, ladite portion mobile étant munie d'au moins un rebord transversal pour permettre un serrage du rail entre le rebord transversal et le corps de l'élément amortisseur.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1 est une vue en perspective d'une palette support portant le siège et le meuble correspondant destinée à être fixée sur des rails d'une cabine d'avion;
- La figure 2 est une vue en coupe d'une attache de siège de la palette support de la figure 1 ;
- La figures 3 est une vue en perspective illustrant le déplacement de l'attache de siège dans le rail lors d'un crash;
- La figure 4 est une vue en perspective illustrant l'implantation d'une butée d'arrêt selon l'invention devant l'attache de siège;
- La figure 5 est une vue en coupe de l'attache de siège et de la butée d'arrêt selon l'invention;
- La figure 6 est une vue en perspective d'une butée d'arrêt selon l'invention;
- La figure 7 est une vue en coupe d'une butée d'arrêt selon l'invention;
- La figure 8 est une représentation graphique montrant l'évolution, en fonction du temps, d'un déplacement de l'attache à l'intérieur d'un rail au cours d'un test de crash respectivement pour une attache de siège seule et une attache associée à une butée d'arrêt;
- La figure 9 est une vue en perspective illustrant le positionnement de deux éléments amortisseurs destinés à être intercalés entre un ensemble de deux sièges et des rails de la cabine d'avion;
- La figure 10 est une vue schématique en perspective illustrant la configuration de l'élément amortisseur et son positionnement par rapport au plancher de l'aéronef;
- La figure 11 est une vue en perspective illustrant un mode de réalisation possible de l'élément amortisseur.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par ailleurs, les termes relatifs du type "avant" et "arrière" sont entendus par référence à un siège en position d'installation dans la cabine d'avion, un élément "arrière" étant situé du côté du dossier et un élément "avant" étant situé du côté opposé au dossier du siège.

La figure 1 montre une palette support 1 de siège d'avion munie d'un panneau de renfort 2 ainsi que d'une poutre avant 3 et d'une poutre arrière 4 situées de part et d'autre du panneau de renfort 2.

L'assemblage de cet ensemble est réalisé au moyen de deux longerons 5 muni chacun d'une gorge 8 recevant un bord du panneau de renfort 2. La fixation entre chaque longeron 5 et le panneau 2 est réalisé par exemple par rivetage. En outre, chaque longeron 5 comporte à chacune de ses extrémités un logement 9 pour recevoir respectivement la poutre avant 3 et la poutre arrière 4. La fixation des poutres 3, 4 aux longerons 5 pourra être réalisée par exemple au moyen de boulons ou tout autre dispositif de fixation adapté.

La palette support 1 comporte en outre des organes de fixation 11 avec le siège d'avion ainsi que des organes de fixation 12 avec un meuble associé au siège. La palette 1 est également équipée d'attaches 15 assurant la fixation de la palette 1 avec des rails 16 s'étendant le long du plancher de la cabine d'avion.

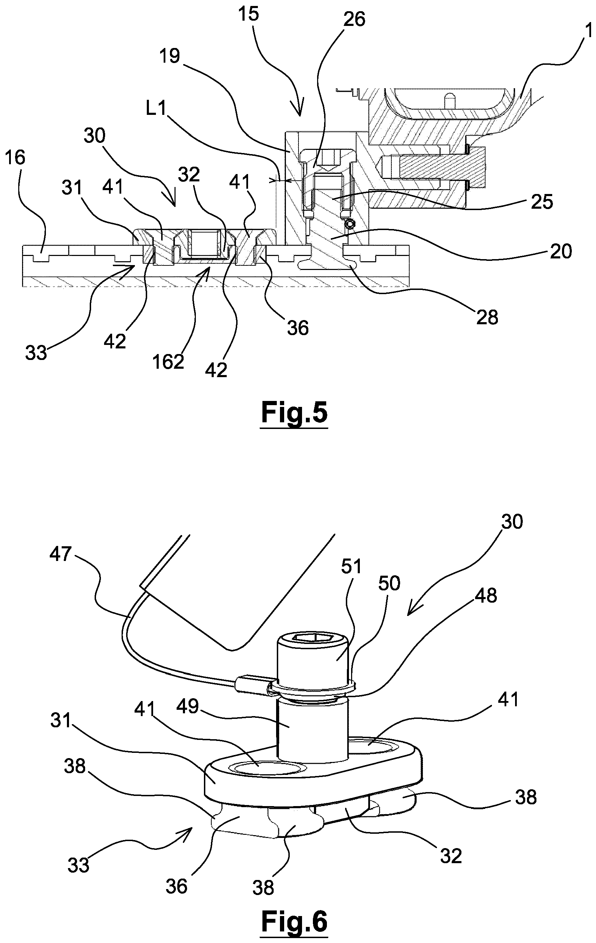

En l'occurrence, comme on peut le voir sur les figures 4 et 5, l'attache 15 comporte un corps 19 creux dans lequel est monté un pion 20 mobile en translation par rapport au corps 19 pour permettre un maintien par serrage de l'attache 15 sur les lèvres 23 du rail 16.

A cet effet, le pion 20 présente une extrémité filetée 25 coopérant avec un alésage taraudé d'une vis creuse 26. Ainsi, la mise en rotation de la vis 26 par l'opérateur au moyen d'un outil adapté permet de faire remonter le pion 20, de telle façon que les lèvres 23 d'une zone d'appui 161 du rail 16 sont maintenues pincées entre un rebord radial 28 d'extrémité du pion 20 et le corps 19 de l'attache 15.

En outre, une butée d'arrêt 30 est installée sur le rail 16 présentant une alternance de zones d'appui 161 dans lesquelles deux lèvres 23 dirigées l'une vers l'autre font saillie vers l'intérieur du rail 16, et de zones ouvertes 162 dans lesquelles une longueur des lèvres 23 en vis-à-vis l'une de l'autre est réduite voire nulle.

Comme cela est visible sur les figures 5, 6, et 7, la butée d'arrêt 30 comporte un corps 31 muni d'un plongeur 32 s'étendant en saillie par rapport à la face arrière du corps 31. Ce plongeur 32 est destiné à s'insérer dans une zone ouverte 162 du rail 16 pour venir en butée contre des lèvres 23 d'une zone d'appui 161 adjacente.

La butée d'arrêt 30 comporte en outre un dispositif de maintien 33 sur le rail 16. Ce dispositif de maintien 33 comporte une portion 36 mobile en translation par rapport au corps 31. La portion mobile 36 est munie de rebords transversaux 38 pour permettre un serrage d'une lèvre 23 du rail 16. En l'occurrence, la portion mobile 36 comporte deux ensembles de deux rebords 38 situés de part et d'autre du plongeur 32 et reliés mécaniquement entre eux. Dans chaque ensemble, les rebords 38 sont dirigés transversalement, c'est-à-dire sensiblement perpendiculairement à la direction longitudinale du rail 16 suivant deux sens opposés l'un par rapport à l'autre, tel que montré sur la figure 6.

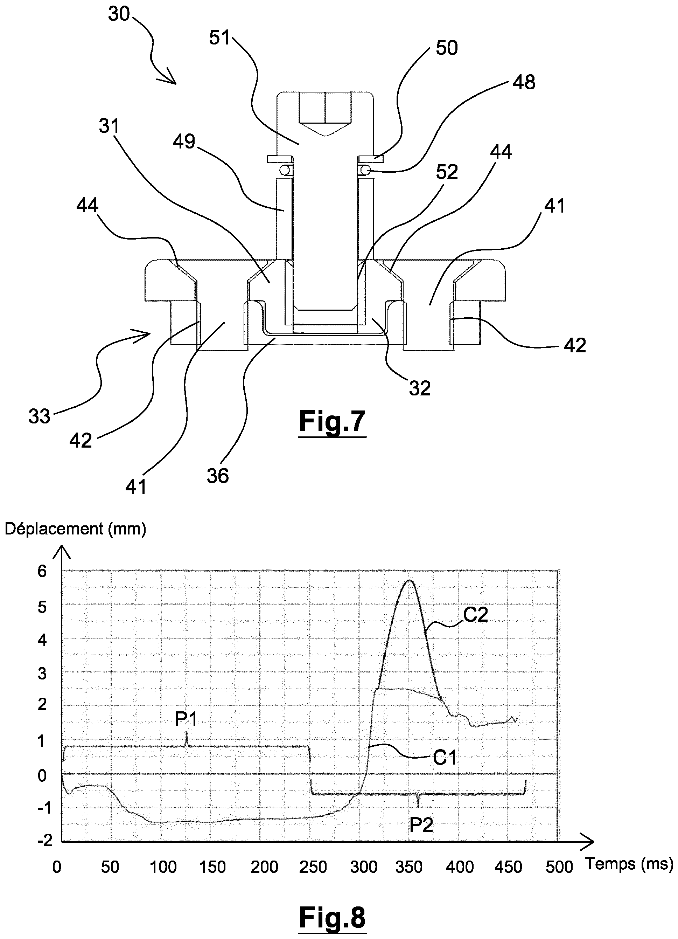

A cet effet, des vis 41 pénètrent dans des alésages taraudés 42 pratiqués dans le corps 31 et la portion mobile 36, de telle façon qu'une rotation des vis 41 au moyen d'un outil adapté permet d'engendrer un déplacement de la portion mobile 36 en direction du corps 31 afin d'assurer un serrage d'une lèvre 23 entre les rebords 38 et le corps 31 de la butée d'arrêt 30. Le corps 31 pourra comporter des logements 44 destinés à recevoir chacun une tête de vis correspondante, tel que montré en figure 7. On évite ainsi que les têtes de vis ne fassent saillie après avoir mis en place la butée d'arrêt 30.

En outre, comme cela est illustré sur les figures 6 et 7, on pourra prévoir un câble de retenue 47 de la butée d'arrêt 30 assurant une liaison entre la butée d'arrêt 30 et le siège correspondante. A cet effet, le câble 47 se termine par un collier 48 intercalé axialement entre une entretoise 49 et une rondelle 50, laquelle est en appui contre la tête d'une vis 51 insérée dans un alésage central 52 du corps 31 pour maintenir l'ensemble. L'entretoise 49 est de préférence montée avec jeu autour de la vis 51.

De préférence, comme cela est visible sur la figure 5, la butée d'arrêt 30 est positionnée à distance de l'attache de siège 15 correspondante. Cette distance ne doit pas trop faible car cela engendrerait des problèmes mécaniques susceptibles de détruire le corps 31 de l'attache 15 et/ou la lèvre 23 du rail 16. Par ailleurs, cette distance ne doit pas être trop importante pour pouvoir retenir efficacement l'attache 15 à l'intérieur du rail 16. Un bon compromis est obtenu pour un écart L1 entre la butée d'arrêt 30 et l'attache 15 situé entre 2mm et 3mm.

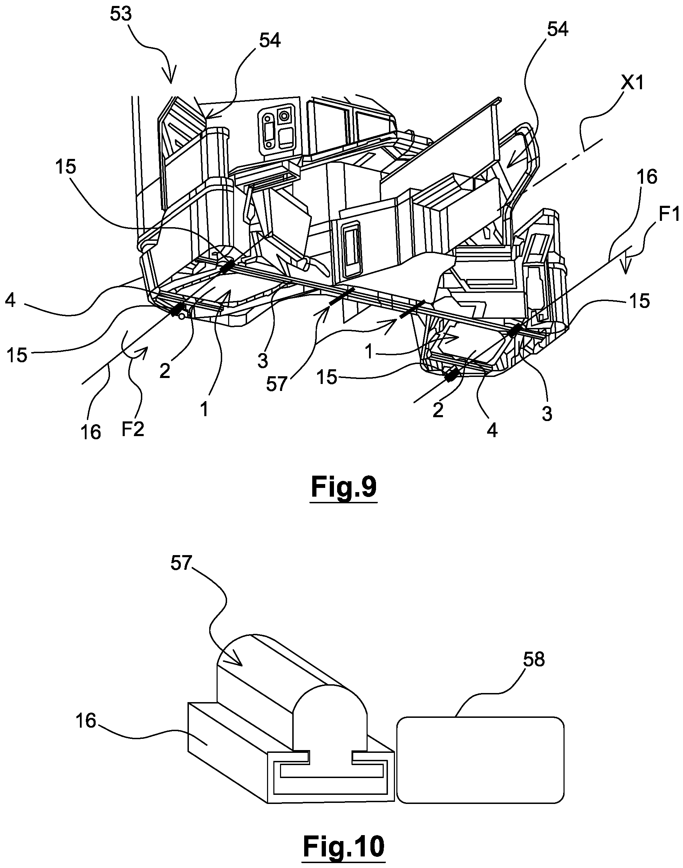

Dans le cas d'un ensemble 53 de deux sièges 54 côte à côté, telle qu'une configuration de sièges en chevron dans lesquelles les axes des sièges 54 forment un angle non nul l'un par rapport à l'autre, deux palettes support 1 sont assemblées entre elles notamment via leur poutre avant 3, tel que cela est illustré par la figure 9. L'ensemble est fixé sur les rails 16 au moyen des attaches 15 correspondantes.

Comme on peut le voir sur la figure 8, dans une phase P1 de déformation du plancher dite de "pitch and roll" en anglais au cours de laquelle une contrainte est imprimée à un des rails 16 de manière à le faire descendre de 10 degrés vers le bas suivant la flèche F1 et une contrainte est imprimée à l'autre rail 16 de manière à le faire pivoter de 10 degrés suivant la flèche F2, l'attache 15 seule et l'attache 15 associée à une butée d'arrêt 30 présentent des déplacements analogues à l'intérieur du rail 16. Ces déplacements sont négatifs car ils correspondent à des mouvements arrière de l'attache 15 sur le rail 16.

Lors de la phase P2 au cours de laquelle un pic de décélération brusque de l'ordre de 16g est appliqué sur l'ensemble, l'attache 15 seule présente un grand déplacement positif vers l'avant susceptible de faire sortir l'attache 15 (cf. courbe C2) alors que la butée d'arrêt 30 permet de retenir l'attache 15 associée (cf. courbe C1). En l'occurrence, le déplacement de l'attache 15 est bloqué à 2.5mm, ce qui correspond au positionnement de la butée d'arrêt 30 par rapport à l'attache 15 correspondante.

Par ailleurs, sur la figure 9, on observe que les attaches 15 sont situées aux extrémités de l'ensemble 53 de deux sièges, ce qui engendre des contraintes mécaniques importantes dans la partie centrale qui est surélevée.

Afin de remédier à cela, deux éléments amortisseurs 57 sont positionnées dans cette partie centrale de part et d'autre de l'axe de symétrie X1 de l'ensemble 53. Chaque élément amortisseur 57 est monté entre une poutre avant 3 d'une palette support 1 et un rail 16 correspondant.

Comme on peut le voir sur la figure 10, l'élément amortisseur 57 fait saillie par rapport au plancher 58 de la cabine d'avion.

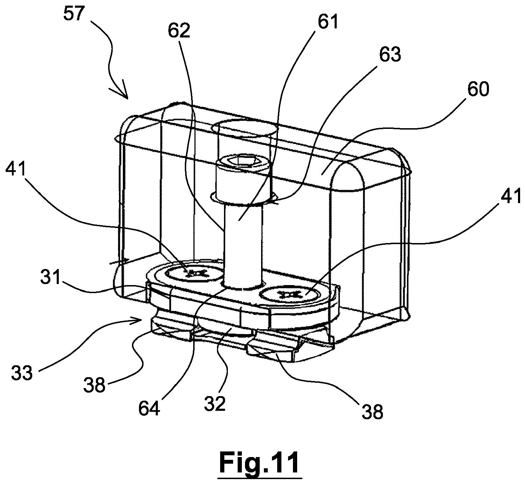

Dans un exemple de réalisation montré sur la figure 11, l'élément amortisseur 57 comporte un corps 31 et une portion 60 réalisée dans un matériau élastique maintenue par une vis 61 sur le corps 31. A cet effet, la portion 60 comporte un trou 62 traversant muni de deux tronçons de diamètres différents définissant un épaulement 63 contre lequel vient en appui la tête de la vis 61. La vis 61 est vissée dans un alésage taraudé 64 du corps 31. La portion élastique 60 pourra par exemple être réalisée en caoutchouc ou dans un matériau élastomère.

Comme la butée d'arrêt 30, l'élément amortisseur 57 pourra comporter un plongeur 32 destiné à s'insérer dans une zone ouverte 162 du rail 16 pour venir en butée contre des lèvres 23 d'une zone d'appui.

Le dispositif de maintien 33 sur le rail 16 comporte une portion 36 mobile en translation par rapport au corps 31. La portion mobile 36 est munie de rebords transversaux 38 pour permettre un serrage du rail 16.

Bien entendu, en variante, il sera possible d'utiliser un seul ou plus de deux éléments amortisseurs 57 pour un ensemble 53 de deux sièges. Cela dépend de l'application.

L'invention pourra également être mise en œuvre avec des sièges installés dans d'autres moyens de transport, comme par exemple des sièges de bus, de trains, ou de bateaux.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre des revendications et notamment toutes combinaisons des différents modes de fonctionnement décrits précédemment, pouvant être pris séparément ou en association.

## Revendications

1. Ensemble comportant:
- un rail (16) présentant une alternance de zones d'appui (161) dans lesquelles deux lèvres (23) dirigées l'une vers l'autre font saillie vers l'intérieur du rail (16), et de zones ouvertes (162), et
- une palette support (1) de siège ayant des organes de fixation (11) avec le siège d'avion et au moins une attache (15) avec un rail (16) de cabine d'avion,
**caractérisé en ce que** ledit ensemble comporte en outre:
- une butée d'arrêt (30) pour siège d'avion destinée à être installée sur ledit rail (16), comportant:
- un corps (31) muni d'un plongeur (32) destiné à s'insérer dans une zone ouverte (162) dudit rail (16) pour venir en butée contre des lèvres (23) d'une zone d'appui (161), et
- au moins un dispositif de maintien (33) de ladite butée d'arrêt (30) sur ledit rail (16),
- et **en ce que** ladite butée d'arrêt (30) est configurée pour être montée sur ledit rail (16) à distance de ladite attache (15).

2. Ensemble selon la revendication 1, **caractérisée en ce que** le dispositif de maintien (33) comporte une portion (36) mobile en translation par rapport au corps (31), ladite portion mobile (36) étant munie d'au moins un rebord transversal (38) pour permettre un serrage d'une lèvre (23) du rail (16) entre ledit rebord transversal (38) et le corps (31) de la butée d'arrêt.

3. Ensemble selon la revendication 2, **caractérisée en ce qu'**elle comporte deux ensembles de rebords transversaux (38) situés de part et d'autre du plongeur (32).

4. Ensemble selon la revendication 1, **caractérisé en ce qu'**un écart (L1) entre la butée d'arrêt (30) et l'attache (15) est comprise entre 2mm et 3mm.

5. Ensemble selon la revendication 1 ou 4, **caractérisé en ce qu'**un élément amortisseur (57) est monté entre une poutre (3) de la palette support (1) de siège et un rail (16) de cabine d'avion.

6. Ensemble selon la revendication 5, **caractérisé en ce que** l'élément amortisseur (57) fait saillie par rapport à un plancher (58) de cabine d'avion.

7. Ensemble selon la revendication 5 ou 6, **caractérisé en ce que** l'élément amortisseur (57) comporte:
- un corps (31),
- une portion (60) réalisée dans un matériau élastique fixée sur le corps (31), et
- au moins un dispositif de maintien (33) sur le rail (16).

8. Ensemble selon la revendication 7, **caractérisé en ce que** l'élément amortisseur (57) est muni d'un plongeur (32) destiné à s'insérer dans une zone ouverte (162) dudit rail (16) pour venir en butée contre des lèvres (23) d'une zone d'appui (161).

9. Ensemble selon la revendication 7 ou 8, **caractérisé en ce que** l'élément amortisseur (57) comporte une portion (36) mobile en translation par rapport au corps (31), ladite portion mobile (36) étant munie d'au moins un rebord transversal (38) pour permettre un serrage du rail (16) entre le rebord transversal (38) et le corps (31) de l'élément amortisseur (57).

## Patentansprüche

1. Baugruppe, umfassend:
- eine Schiene (16) mit abwechselnden Stützbereichen (161), in denen zwei aufeinander gerichtete Lippen (23) zur Innenseite der Schiene (16) ragen, und offenen Bereichen (162), und
- eine Sitzträgerpalette (1) mit Befestigungselementen (11) zur Befestigung am Flugzeugsitz und mindestens einer Lasche (15) zur Befestigung an einer Flugzeugkabinenschiene (16),
**dadurch gekennzeichnet, dass** die baugruppe ferner umfasst:
- einen Flugzeugsitzanschlag (30), der dazu bestimmt ist, an die Schiene (16) angebracht zu werden, umfassend:
- einen Körper (31), der mit einem Stößel (32) versehen ist, der dazu bestimmt ist, in einen offenen Bereich (162) der Schiene (16) eingeführt zu werden, um an die Lippen (23) eines Stützbereichs (161) anzustoßen, und
- mindestens eine Haltevorrichtung (33) für den Anschlag (30) an der Schiene (16),
- und, dass der Anschlag (30) konfiguriert ist, um in einem Abstand von der Lasche (15) an der Schiene (16) montiert zu werden.

2. Baugruppe nach Anspruch 1, **dadurch gekennzeichnet, dass** die Haltevorrichtung (33) einen beweglichen Abschnitt (36) umfasst, der eine Translationsbewegung relativ zum Körper (31) ausführen kann, wobei der bewegliche Abschnitt (36) mit mindestens einem Querflansch (38) zum Festklemmen einer Lippe (23) der Schiene (16) zwischen dem Querflansch (38) und dem Körper (31) des Anschlags versehen ist.

3. Baugruppe nach Anspruch 2, **dadurch gekennzeichnet, dass** sie zwei Sätze von Querflanschen (38) umfasst, die sich auf beiden Seiten des Stößels (32) befinden.

4. Baugruppe nach Anspruch 1, **dadurch gekennzeichnet, dass** ein Abstand (L1) zwischen dem Anschlag (30) und der Lasche (15) zwischen 2mm und 3mm liegt.

5. Baugruppe nach Anspruch 1 oder 4, **dadurch gekennzeichnet, dass** ein Dämpfungselement (57) zwischen einem Träger (3) der Sitzträgerpalette (1) und einer Flugzeugkabinenschiene (16) gelagert ist.

6. Baugruppe nach Anspruch 5, **dadurch gekennzeichnet, dass** das Dämpfungselement (57) aus einem Flugzeugkabinenboden (58) herausragt.

7. Baugruppe nach Anspruch 5 oder 6, **dadurch gekennzeichnet, dass** das Dämpfungselement (57) aufweist:
- einen Körper (31),
- einen Abschnitt (60) aus einem elastischen Material, der am Körper (31) befestigt ist, und
- mindestens eine Haltevorrichtung (33) an der Schiene (16) .

8. Baugruppe nach Anspruch 7, **dadurch gekennzeichnet, dass** das Dämpfungselement (57) mit einem Stößel (32) versehen ist, der dazu bestimmt ist, in einen offenen Bereich (162) der Schiene (16) eingeführt zu werden, um an Lippen (23) einer Stützbereichs (161) anzustoßen.

9. Baugruppe nach Anspruch 7 oder 8, **dadurch gekennzeichnet, dass** das Dämpfungselement (57) einen beweglichen Abschnitt (36) umfasst, der eine Translationsbewegung relativ zum Körper (31) ausführen kann, wobei der bewegliche Abschnitt (36) mit mindestens einem Querflansch (38) zum Festklemmen der Schiene (16) zwischen dem Querflansch (38) und dem Körper (31) des Dämpfungselements (57) versehen ist.

## Claims

1. An assembly comprising:
- a rail (16) having alternating support zones (161), in which two lips (23) directed towards one another protrude towards the inside of the rail (16), and open zones (162), and
- a seat support pallet (1) comprising fixing members (11) for the fixation to the aircraft seat and at least one fastener (15) for the fixation to an aircraft cabin rail (16),
**characterized in that** said assembly further comprises:
- an airplane seat stop (30) intended to be installed on said rail (16), comprising:
- a body (31) provided with a plunger (32) intended to be inserted in an open area (162) of said rail (16) so as to abut against the lips (23) of a support area (161), and
- at least one holding device (33) for said stop (30) on said rail (16),
- and **in that** said stop (30) is configured to be mounted on said rail (16) at a distance from said fastener (15).

2. The assembly according to claim 1, **characterized in that** the holding device (33) comprises a movable portion (36) that can carry out a movement of translation relative to the body (31), wherein said movable portion (36) is provided with at least one transverse flange (38) for clamping a lip (23) of the rail (16) between said transverse flange (38) and the body (31) of the stop.

3. The assembly according to claim 2, **characterized in that** it comprises two sets of transverse flanges (38) located on either side of the plunger (32).

4. The assembly of claim 1, **characterized in that** a spacing (L1) between the stop (30) and the fastener (15) is comprised between 2mm and 3mm.

5. The assembly according to claim 1 or 4, **characterized in that** a damping element (57) is mounted between a beam (3) of the seat support pallet (1) and an aircraft cabin rail (16).

6. The assembly according to claim 5, **characterized in that** the damping element (57) protrudes from an aircraft cabin floor (58).

7. The assembly according to claim 5 or 6, **characterized in that** the damping element (57) comprises:
- a body (31),
- a portion (60) made of an elastic material and fixed to the body (31), and
- at least one holding device (33) on the rail (16).

8. The assembly according to claim 7, **characterized in that** the damping element (57) is provided with a plunger (32) intended to be inserted in an open area (162) of said rail (16) so as to abut against lips (23) of a support zone (161).

9. The assembly according to claim 7 or 8, **characterized in that** the damping element (57) comprises a movable portion (36) that can carry out a movement of translation relative to the body (31), wherein said movable portion (36) is provided with at least one transverse flange (38) for clamping the rail (16) between the transverse flange (38) and the body (31) of the damping element (57).
